Europäisches Patentamt

European Patent Office

Office européen des brevets

(19)

(11) Veröffentlichungsnummer: **0 275 488**
**B1**

(12) **EUROPÄISCHE PATENTSCHRIFT**

(45) Veröffentlichungstag der Patentschrift: **30.01.91**

(21) Anmeldenummer: **87118604.5**

(22) Anmeldetag: **15.12.87**

(51) Int. Cl.$^5$: **F 16 H 61/20, F 16 D 67/00**

(54) **Vorrichtung zum Abbremsen eines Getriebeelements.**

(30) Priorität: **22.01.87 DE 3701744**

(43) Veröffentlichungstag der Anmeldung:
**27.07.88 Patentblatt 88/30**

(45) Bekanntmachung des Hinweises auf die
Patenterteilung:
**30.01.91 Patentblatt 91/05**

(84) Benannte Vertragsstaaten:
**BE DE FR GB IT**

(56) Entgegenhaltungen:
**DE-A-2 437 865**
**DE-A-2 601 418**
**GB-A-1 380 320**
**GB-A-2 003 246**
**US-A-3 487 438**
**US-A-3 599 764**
**US-A-3 978 948**
**US-A-4 433 762**

(73) Patentinhaber: **DEERE & COMPANY**
**1 John Deere Road**
**Moline, Illinois 61265 (US)**

(72) Erfinder: **Kempf, Bernd**
**Friedhofstrasse 10**
**D-6661 Althornbach (DE)**
Erfinder: **Scheid, Heinrich**
**Merowingerstrasse 9**
**D-6653 Blieskastel (DE)**

(74) Vertreter: **Feldmann, Bernhard et al**
**DEERE & COMPANY European Office, Patent**
**Department Steubenstrasse 36-42 Postfach 503**
**D-6800 Mannheim 1 (DE)**

**Beschreibung**

Die Erfindung bezieht sich auf eine Vorrichtung zum Abbremsen eines Getriebeelements, beispielsweise einer Eingangswelle, in einem Wechselgetriebe für Kraftfahrzeuge, insbesondere für Mähdrescher, mit einer das Getriebeelement abbremsenden Reibungsbremse und einem einen ersten und einen zweiten Schalter aufweisenden Stromkreis, wobei der erste Schalter bei sich in Neutralstellung befindlichem Wechselgetriebe und der zweite Schalter bei ausgerückter Schaltkupplung jeweils geschlossen, ansonsten offen sind und die Reibungsbremse nur bei geschlossenen Schaltern eingerückt ist.

Bei dieser bekannten Vorrichtung (US-A-4 433 762) bleibt die Reibungsbremse so lange angelegt, wie sich das Wechselgetriebe in der Neutralstellung befindet oder die Schaltkupplung ausgerückt bleibt. Da aber zum Abbremsen des Getriebeelementes in der Regel nur ein kurzer Zeitmoment erforderlich ist, bleibt die Reibungsbremse zu lange angelegt, was zu erhöhtem Verschleiß führt. Andererseits ist bereits vorgeschlagen worden (GB-A-1 380 320), daß die Reibungsbremse kurzzeitig nach dem Anlegen wieder gelöst wird. Bei dieser Vorrichtung ist mit dem Kupplungspedal ein Auslegerarm schwenkbar verbunden, der an einem mit der Reibungsbremse versehenen Kipphebel angreift, so daß beim Betätigen des Kupplungspedals sich die Reibungsbremse an das Getriebeelement anlegt. In dem Auslegerarm ist eine federbelastete Zylinder-Kolbeneinheit vorgesehen, die nach dem Anlegen der Getriebebremse diese wieder selbsttätig löst. Dadurch ist eine aufwendige Vorrichtung geschaffen, die darüber hinaus ein gezieltes Lösen erschwert. Hinzu kommt, daß bei dieser Vorrichtung ein Abbremsen so lange erfolgt, wie das Kupplungspedal betätigt wird, also auch bei Betätigung des Kupplungspedals beispielweise beim Abbremsen des Kraftfahrzeuges. Dies ist bei der gattungsbildenden Vorrichtung dadurch ausgeschlossen worden, daß die Reibungsbremse nur dann angelegt werden kann, wenn der Schalthebel für das Getriebe sich seiner Neutralstellung nähert. Wie jedoch dann der entsprechende Schalter geschlossen wird, ist in diesem Dokument nicht offenbart.

Die mit der Erfindung zu lösende Aufgabe wird darin gesehen, die Lebensdauer der Reibungsbremse durch gezielten Einsatz zu erhöhen.

Diese Aufgabe kann dadurch gelöst werden, daß einer der Schalter derart relaisgesteuert ist, daß er kurz nach dem Schließen wieder öffnet. Auf diese Weise wird die Reibungsbremse nur für einen relativ kleinen Zeitmoment angelegt und wieder gelöst. Sie ist damit nur kurz und gezielt im Einsatz, so daß ihre Lebensdauer um ein Vielfaches erhöht wird.

Nach der Erfindung wird ferner vorgeschlagen, daß der erste Schalter über ein Tastorgan geschlossen wird, das in an einer Schaltwelle vorgesehenen Vertiefungen einrastbar ist, wobei die Vertiefungen je einem Getriebegang zugeordnet sind. Hiermit wiederum wird erreicht, daß, sobald eine Schaltstellung gegeben ist, die nicht der Neutralstellung entspricht, das Tastorgan in die Vertiefung rutscht und damit den Kontakt zum ersten Schalter verliert, wodurch dieser in seine Offenstellung schwenkt und die Reibungsbremse löst. Durch diese Maßnahme wird die Lebensdauer der Reibungsbremse weiter erhöht.

Im einzelnen kann hierzu der zweite Schalter mit einem in einem zweiten Stromkreis vorgesehenen Relais verbunden sein, der einen dritten Schalter aufweist, der über ein Kupplungspedal bei ausgerückter Schaltkupplung geschlossen wird. Bei der Betätigung des Kupplungspedals wird damit der dritte Schalter geschlossen, der dann das Relais mit Strom versorgt. Aufgrund der Stromversorgung schließt das Relais den zweiten Schalter, und bei ebenfalls geschlossenem ersten Schalter rückt die Reibungsbremse ein. Innerhalb einer sehr kurzen Zeitspanne von etwa 0,5 bis 0,7 sec kommt dann das Getriebeelement zum Stillstand, wonach das Relais den zweiten Schalter wieder sich öffnen läßt.

Eine besonders schnelle Abbremszeit läßt sich erzielen, wenn die Reibungsbremse als Elektromagnetbremse ausgebildet ist und auf die Eingangswelle wirkt.

In der Zeichnung ist ein nachfolgend näher erläutertes Ausführungsbeispiel der Erfindung dargestellt. Es zeigt:

Fig. 1 ein Wechselgetriebe mit einer Schaltkupplung und einem Antriebsrad, das über ein Zugmittel mit einer Verbrennungskraftmaschine in Antriebsverbindung bringbar ist,

Fig. 2 eine Schaltwelle mit einem Tastorgan zur Erfassung der Schaltstellung des Wechselgetriebes.

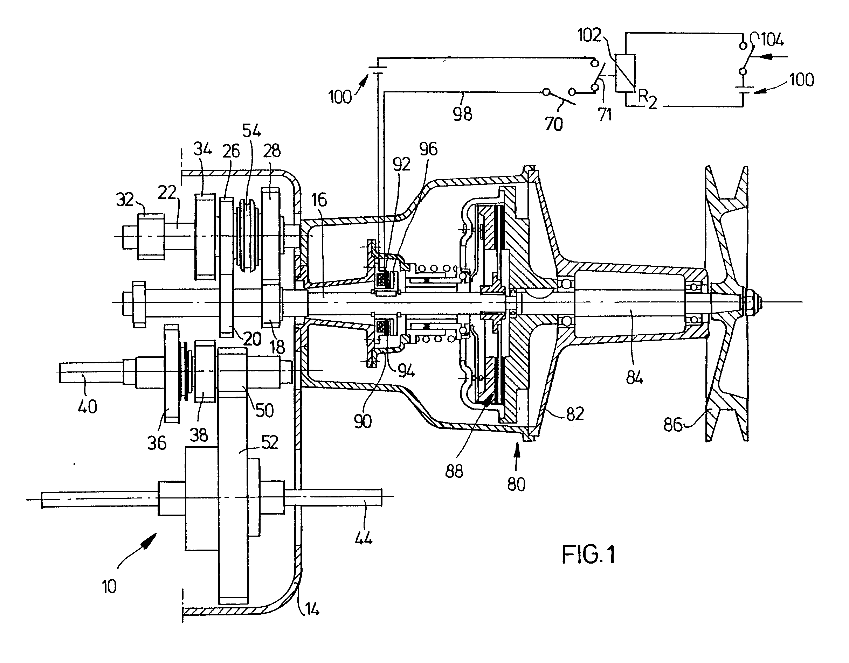

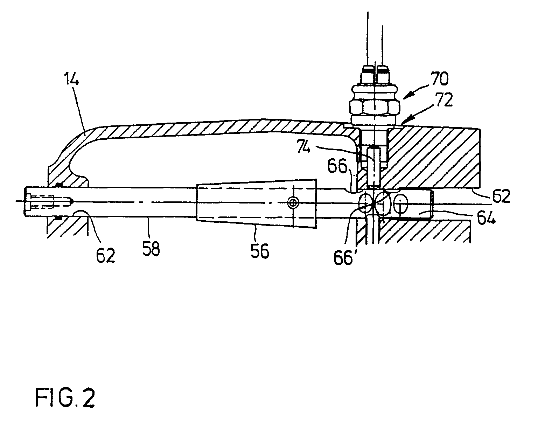

In Fig. 1 der Zeichnung ist mit 10 ein Wechselgetriebe bezeichnet, das beispielsweise als Wechselgetriebe für einen in der Zeichnung nicht dargestellten Mähdrescher eingesetzt werden kann und aus diesem Grunde nicht synchronisiert ist. Das Wechselgetriebe 10 weist ein Getriebegehäuse 14 mit einer Eingangswelle 16 auf, auf der Zahnräder 18 und 20 angeordnet sind. Die Zahnräder 18 und 20 stehen mit auf einer getriebenen Welle 22 drehbar angeordneten Zahnrädern 26 und 28 ständig in Eingriff. Auf der getriebenen Welle 22 sind ferner Zahnräder 32 und 34 angeordnet, die mit auf einer Vorgelegewelle 40 angeordneten Zahnrädern 36 und 38 kämmen. In Fig. 1 der Zeichnung sind die einzelnen Wellen der Einfachheit halber in einer Ebene dargestellt und die Zahnräder 36, 38 nach rechts verschoben. In dieser Stellung kämmt nur das Zahnrad 34 mit dem Zahnrad 38. Werden die Zahnräder 36, 38 nach links verschoben, dann kämmt nur das Zahnrad 32 mit dem Zahnrad 36. Die Vorgelegewelle 40 dient zum Antrieb einer Ausgangswelle 44 zum Antrieb der Laufräder. Hierzu ist auf der Vorgelegewelle 40 ein weiteres Zahnrad 50 vorgesehen, das mit einem auf der Ausgangswelle 44 vorgesehenen Zahnrad 52 kämmt. Die auf der getriebenen Welle 22 angeordneten Zahnräder 26 und 28 werden wechselweise über eine Schaltmuffe 54 mit der getriebenen Welle 22 in Antriebsverbindung gebracht. Hierzu weisen die Zahnräder 26 und 28 an ihren Stirnseiten je einen Zahnkranz auf, der mit einem entsprechenden Ringrad der Schaltmuffe wechselweise in Eingriff bringbar ist. Die Schaltmuffe 54 wird über eine in Fig. 2 angedeutete Schaltgabel 56 verstellt, die an einer im Getriebegehäuse 14 angeordneten Schaltwelle 58 angreift. Die Schaltwelle 58 ist endseitig in je einer im Getriebegehäuse 14 vorgesehenen Bohrung 62 verschiebbar aufgenommen. Der in die rechte Bohrung 62 hineinreichende Endteil 64 der Schaltwelle 58 weist mehrere nebeneinander angeordnete Vertiefungen 66, 66' auf, die mit axialem Abstand am Umfang der Schaltwelle 58 verteilt angeordnet sind. Die einzelnen Vertiefungen 66 und 66' sind einer entsprechenden Getriebe- bzw. Gangstellung des Wechselgetriebes zugeordnet, so daß beispielsweise die Vertiefung 66 dem ersten Gang und die Vertiefung 66' dem zweiten Gang usw. entsprechen kann. Oberhalb der Schaltwelle 58 befindet sich ein Schaltelement in Form eines Schalters 70, der in eine Bohrung 72, die im Getriebegehäuse 14 vorgesehen ist, eingeschraubt ist. Der Schalter 70 weist ein Tastorgan 74 auf, das beispielsweise als zylindrischer Stift ausgebildet sein kann und je nach Stellung der Schaltwelle 58 in die entsprechenden Vertiefungen 66 bzw. 66' einrastet und damit die Getriebe- bzw. Gangstellung des Wechselgetriebes 10 abtastet. Der Schalter 70 weist einen über das Tastorgan 74 betätigbaren Schaltkontakt auf.

Wie aus Fig. 1 hervorgeht, steht die Eingangswelle 16 über eine in einem Kupplungsgehäuse 82 angeordnete Schaltkupplung 80 mit einer Eingangswelle 84 in Antriebsverbindung, die endseitig ein Zugmittelrad 86 trägt. Das Zugmittelrad 86 wird über ein in der Zeichnung nicht dargestelltes Zugmittelgetriebe von einer ebenfalls nicht dargestellten Brennkraftmaschine angetrieben. Die Schaltkupplung 80 weist einen Kupplungsautomaten 88 auf, der über ein in der Zeichnung nicht dargestelltes Kupplungspedal, das am Fahrerstand des Mähdreschers vorgesehen sein kann, betätigt wird.

Im Kupplungsgehäuse 82 befindet sich ferner eine elektromagnetisch betätigbare Reibungsbremse 90 mit einer Bremsspule 92, einer Reibscheibe 94 und einer mit der Eingangswelle 16 drehfest verbundenen Lagerscheibe 96. Die Bremsspule 92 der elektromagnetischen Bremse 90 steht über elektrische Leitungen 98 mit einer Stromquelle 100 in Verbindung. In dem Stromkreis ist ein weiterer Schalter 71 mit einem Relais 102 (R2) angeordnet, das über einen dritten elektrischen Schalter 104 mit Strom versorgt wird und den Stromkreis schließt, wenn über das in der Zeichnung nicht dargestellte Kupplungspedal der elektrische Schalter 104 geschlossen wird. Der Schalter 71 mit dem Relais 102 (R2) ist als Zeitschaltrelais ausgebildet und wird nach einem Zeitraum zwischen 0,5 und 1 sek, vorzugsweise 0,7 sek, wieder geöffnet und unterbricht damit den Stromkreis zur Stromversorgung für die Bremsspule 92, so daß nach diesem Zeitraum der Bremsvorgang zur Abbremsung der Eingangswelle 16 des Wechselgetriebes 10 beendet wird. Durch Lösen der Bremse 90 wird innerhalb des Kupplungsgehäuses, insbesondere im Bereich der Reibscheiben der Schaltkupplung 80, ein entsprechender Staudruck bzw. eine Luftverwirbelung geschaffen, die gewährleistet, daß eine geringe Antriebsverbindung zwischen der Eingangswelle 84 und der Eingangswelle 16 des Wechselgetriebes 10 hergestellt wird, so daß die Eingangswelle 16 mit stark verminderter Drehzahl weiterhin angetrieben wird. Dadurch laufen die auf den Zahnrädern 26 und 28 angeordneten Zahnkränze ebenfalls mit, so daß nunmehr die Schaltmuffe 54 entweder nach links oder nach rechts verstellt werden kann und der zugehörige Schaltring der Schaltmuffe 54 ohne weiteres mit den Zähnen des Ringkranzes der Zahnräder in Eingriff gebracht werden kann. Durch das langsame Weiterlaufen der Zahnräder 26 bzw. 28 wird verhindert, daß die Zähne beim Kupplungsvorgang gegeneinander mit ihren Zahnflanken anliegen und dadurch ein Schalten verhindern. Das weiche Einrücken ohne besondere Synchronisierung des Schaltgetriebes wird dadurch erleichtert, daß der Schaltring und der Schaltkranz spitz verzahnte Zähne aufweisen. Durch das abrupte Abbremsen der Eingangswelle 16, insbesondere bei Leerlauf des Wechselgetriebes 10, ist es auf einfache Weise möglich, von dem Leerlauf in einen ersten, zweiten oder dritten Gang zu schalten, ohne daß dabei die einzelnen miteinander in Eingriff zu bringenden Zähne beschädigt werden. Soll jedoch das Wechselgetriebe von einem ersten in einen zweiten Gang bzw. einen weiteren Gang umgeschaltet werden, so wird insbesondere bei Mähdreschern die Weiterfahrt gestoppt, so daß dann die Laufräder die Eingangswelle 16 so weit abbremsen, daß die Schaltmuffe 54 zur Schaltung der einzelnen Gänge ohne weiteres betätigt werden kann. Hierzu ist das Tastorgan 74 mit der Schaltwelle 58 in Wirkverbindung gebracht, das die einzelnen Schaltstellungen der Schaltwelle 58 abtastet und über den Schalter 70 die Stromversorgung für die Bremse 90 unterbricht, so daß lediglich beim Gangwechsel des Wechselgetriebes die Bremse mit Strom versorgt werden kann und sichergestellt ist, daß die Bremse nicht unnötig betätigt wird. Normalerweise wird beim Schaltvorgang von einem Gang in einen anderen die Schaltwelle 58 über ihre Neutralstellung gefahren und der Schalter 70 für eine sehr kurze Zeit von ca. 0,5 sek oder weniger betätigt. Diese Zeit reicht jedoch nicht aus, um über den kurzfristig geschlossenen Schalter 70 eine ausreichende Stromversorgung zur Betätigung der Bremse sicherzustellen.

Auf diese Weise läßt sich die Standzeit der Bremse wesentlich erhöhen, da sie nur eingesetzt wird, wenn das Wechselgetriebe 10 vom Leerlauf aus in einen Gang hochgeschaltet werden soll.

**Patentansprüche**

1. Vorrichtung zum Abbremsen eines Getriebeelements, beispielsweise einer Eingangswelle (16), in einem Wechselgetriebe für Kraftfahrzeuge, insbesondere für Mähdrescher, mit einer das Getriebeelement abbremsenden Reibungsbremse (90) und einem einen ersten und einen zweiten Schalter (70, 71) aufweisenden Stromkreis, wobei der erste Schalter (70) bei sich in Neutralstellung befindlichem Wechselgetriebe und der zweite Schalter (71) bei ausgerückter Schaltkupplung (80) jeweils geschlossen, ansonsten offen sind und die Reibungsbremse (90) nur bei geschlossenen Schaltern (70) eingerückt ist, dadurch gekennzeichnet, daß einer der Schalter (71) derart relaisgesteuert ist, daß er (1) kurz nach dem Schließen wieder öffnet.

2. Vorrichtung nach Anspruch 1, dadurch gekennzeichnet, daß der erste Schalter (70) über ein Tastorgan (74) geschlossen wird, das in an einer Schaltwelle (58) vorgesehenen Vertiefungen (66, 66') einrastbar ist, wobei die Vertiefungen (66, 66') je einem Getriebegang zugeordnet sind.

3. Vorrichtung nach Anspruch 1 oder 2, dadurch gekennzeichnet, daß der zweite Schalter (71) mit einem in einem zweiten Stromkreis vorgesehenen Relais (102) verbunden ist, der einen dritten Schalter (104) aufweist, der über ein Kupplungspedal bei ausgerückter Schaltkupplung (80) geschlossen wird.

4. Vorrichtung nach einem oder mehreren der vorherigen Ansprüche, dadurch gekennzeichnet, daß die Reibungsbremse (90) als Elektromagnetbremse ausgebildet ist und auf die Eingangswelle (16) wirkt.

**Revendications**

1. Dispositif pour freiner un élément de transmission, par exemple un arbre d'entrée (16), dans une boîte de vitesses pour véhicules automobiles, notamment pour moissonneuses-batteuses, comportant un frein à friction (90) freinant l'élément de transmission, et un circuit comportant des premier et second interrupteurs (70; 71), et dans lequel le premier interrupteur (70) est fermé lorsque la boîte de vitesses est dans sa position neutre et le second interrupteur (71) est fermé lorsque l'embrayage (80) est débrayé, alors que, sinon, ces interrupteurs sont ouverts, et le frein à friction (90) est activé seulement lorsque les interrupteur (70) sont fermés, caractérisé en ce que l'un des interrupteurs (71) est commandé par un relais de sorte qu'il s'ouvre à nouveau peu après la fermeture, pour le desserrage du frein à friction (90).

2. Dispositif selon la revendication 1, caractérisé en ce que le premier interrupteur (70) est fermé par l'intermédiaire d'un organe formant poussoir (74), qui peut étre encliqueté dans des renfoncements (66, 66') prévus dans un arbre de commutation (58) associés chacun à un rapport de la transmission.

3. Dispositif selon la revendication 1 ou 2, caractérisé en ce que le second interrupteur (71) est relié à un relais (102), qui est prévu dans un second circuit qui contient un troisième interrupteur (104) fermé par l'intermédiaire d'une pédale d'embrayage lorsque l'embrayage (80) est débrayé.

4. Dispositif selon une ou plusieurs des revendications précédentes, caractérisé en ce que le frein à friction (90) est réalisé sous la forme d'un frein électromagnétique et agit sur l'arbre d'entrée (16).

**Claims**

1. Device for braking a transmission element, for example an input shaft (16), in a change-speed gear for power vehicles. especially for combine harvesters, with a friction brake (90) braking the transmission element and a circuit having a first and a second switch (70, 71), wherein the first switch (70) and the second switch (71) are respectively closed in the neutral position of the change-speed gear and with the clutch (80) disengaged, being otherwise open, and the friction brake (90) being engaged only with closed switches (70), characterized in that one of the switches (71) is so relay-controlled that it re-opens again shortly after closing to free the friction brake (90).

2. Device according to claim 1, characterized in that the first switch (70) is closed by a sensing organ (74), which can engage in recesses (66, 66') provided on a selector shaft (58), the recesses (66, 66') each being associated with one gear ratio.

3. Device according to claim 1 or 2, characterized in that the second switch (71) is connected to a relay (102) provided in a second circuit, which has a third switch (104) which is closed by a clutch pedal with the clutch (80) disengaged.

4. Device according to one or more of the preceding claims, characterized in that the friction brake (90) is formed as an electromagnetic brake and acts on the input shaft (16).

FIG.1

FIG.2